# EUROPÄISCHE PATENTSCHRIFT

(11) **EP 0 512 137 B1**
(45) Veröffentlichungstag und Bekanntmachung des Hinweises auf die Patenterteilung: **05.03.1997**
(21) Anmeldenummer: 91107336.9
(22) Anmeldetag: 06.05.1991
(51) Int. Cl.: G21C 19/307, G21C 3/32

(54) **Kernreaktorbrennelement**
Nuclear fuel assembly
Assemblage de combustible nucléaire

(43) Veröffentlichungstag der Anmeldung: 11.11.1992
(73) Patentinhaber: SIEMENS AKTIENGESELLSCHAFT, 80333 München (DE)
(72) Erfinder: Beuerlein, Bernd, Dipl.-Ing. (FH), W-8520 Erlangen (DE); Friedrich, Erhard, W-8501 Eckental (DE); Steinke, Alexander, W-8553 Ebermannstadt (DE)

(56) Entgegenhaltungen:
- EP-A- 0 319 725
- EP-A- 0 401 082
- US-A- 4 684 495

## Beschreibung

Die Erfindung betrifft einen Kernreaktorbrennelement entsprechend dem Gattungsbegriff des Patentanspruches 1 ("Nuclear Engineering International", März 1990, Seite 32).

Bei manchen Brennelementen (z.B. EP-A-0 319 725) ist das Abfanggitter unterhalb von gitterförmigen Abstandhaltern, an deren Gitterstegen die Brennstabe federnd abgestützt sind, angeordnet und an Führungsrohren und/oder Abstandhaltern gehalten, sie bestehen aus starren Stegen mit engeren Durchführungen für die Brennstäbe und das Kühlmittel. Bei Inspektionen oder Reparaturen müssen entweder die Brennelemente nach Entfernen der Kopfplatte von oben her zerlegt oder die Abfanggitter nach Entfernen der Fußplatte von ihren Halterungen unten an den Führungsrohren und/oder Abstandhaltern gelöst werden, wenn deformierte Brennstäbe entnommen werden sollen und sich in den engen und starren Maschen des Abfanggitters zu verkeilen drohen.

Bei reparaturfreundlicheren Brennelementen ist das Abfanggitter ebenso wie die Fußplatte ein Bestandteil eines vom Brennstabbündel lösbaren Brennelement-Fußes. Bei dem eingangs genannten, bekannten Kernreaktorbrennelement befindet sich das Abfanggitter auf der Anströmseite, d.h. der Unterseite der Fußplatte.

In einem Kernreaktor hält dieses Abfanggitter vom Kühlmittel, das das Kernreaktorbrennelement ausgehend von der Fußplatte der Länge nach durchströmt, mitgeführte Festkörper wie verlorene Drahtstücke, Blechstücke, Schrauben, Muttern etc. vom Eindringen in das Kernreaktorbrennelement ab. Solche Festkörper können sich dann nicht im Kernreaktorbrennelement festsetzen und zu Beschädigungen an den Brennstäben oder auch an Strukturteilen des Kernreaktorbrennelementes führen.

In einem Kernreaktor, insbesondere in einem Druckwasserkernreaktor, kann das ein Kernreaktorbrennelement durchströmende flüssige Kühlmittel ganz erhebliche Geschwindigkeit haben, und es hat sich gezeigt, daß das Abfanggitter durch im Kühlmittel mitgeführte Festkörper unter Umständen sehr stark beschädigt wird. Im Extremfall kann das Abfanggitter entweder verstopfen oder sogar Quelle weiterer vom Kühlmittel in das Kernreaktorbrennelement mit hineingerissener Festkörper sein.

Es sind auch Brennelemente bekannt, (z.B. US-PS 4,900,507) bei denen die Durchführungen, die das Kühlmittel durch die Fußplatte hindurch zu den Brennstäben leiten, bereits so klein sind, daß sie Festkörper zurückhalten, die sich zwischen den Brennstäben und insbesondere an den Maschen von Abstandshaltern verfangen könnten. Da die Fußplatte aber ein Teil des Skelettes ist, das das Gewicht des ganzen Brennelementes trägt und an dem starke hydraulische Kräfte angreifen, muß sie massiv ausgeführt sein, so daß an den kleinen Durchführungen ein störender Druckverlust auftritt.

Der Erfindung liegt die Aufgabe zugrunde, auf möglichst einfache und zuverlässige Weise Beschädigungen des Brennelementes durch im Kühlmittelstrom mitgeführte Fremdkörper zu verhindern.

Zur Lösung dieser Aufgabe hat ein Kernreaktorbrennelement der eingangs erwähnten Art erfindungsgemäß das Merkmal des kennzeichnenden Teiles des Patentanspruches 1. Vorteilhafte Weiterbildungen sind in den Unteransprüchen angegeben.

Bei diesem Kernreaktorbrennelement wird die Wucht von Festkörpern, die in einem Kernreaktor vom Kühlmittel mitgeführt werden, in erster Linie von der massiven Fußplatte aufgenommen, und ein nicht unerheblicher Teil dieser mitgeführten Festkörper gelangt gar nicht erst an das Abfanggitter. Deshalb kann das Abfanggitter auch aus besonders dünnwandigem Blech ausgeführt sein, so daß es in einem Kernreaktor nur wenig Druckverluste in dem das Kernreaktorbrennelement durchströmenden Kühlmittel verursacht.

Das Abfanggitter ist also bei der Erfindung ein flaches Bauteil, das nur durch geringfügige Anpassungen an der Fußplatte und den daran verschraubten Steuerstabführungsrohren in den Fußteil des Brennelementes integriert werden kann.

Die Patentansprüche 2 bis 12 sind auf vorteilhafte Ausbildungen des erfindungsgemäßen Kernreaktorbrennelementes gerichtet.

Die Erfindung und ihre Vorteile seien anhand der Zeichnung an Ausführungsbeispielen näher erläutert:

FIG 1 zeigt in perspektivischer Ansicht ein erfindungsgemäßes Kernreaktorbrennelement für einen Druckwasserkernreaktor.

FIG 2 zeigt eine detailliertere perspektivische Ansicht des Kernreaktorbrennelementes nach FIG 1.

FIG 3 zeigt im Ausschnitt eine Draufsicht auf die Fußplatte des Kernreaktorbrennelementes nach den Figuren 1 und 2.

FIG 4 zeigt teilweise geschnitten eine Seitenanischt zur FIG 3. FIG 5 zeigt eine Draufsicht auf die Fußplatte einer anderen Ausführungsform des Kernreaktorbrennelementes.

FIG 6 zeigt eine Seitenansicht zu FIG 5.

FIG 7 zeigt im Längsschnitt eine Durchführung in der Fußplatte des erfindungsgemäßen Kernreaktorbrennelementes.

FIG 8 zeigt eine Draufsicht in Richtung des Pfeiles A in FIG 7 auf die Anströmseite (Unterseite) der Fußplatte mit der Durchführung nach FIG 7.

FIG 9 zeigt im Längsschnitt eine Durchführung in der Fußplatte einer weiteren Ausführungsform des erfindungsgemäßen Kernreaktorbrennelementes.

FIG 10 zeigt eine Draufsicht in Richtung des Pfeiles A in FIG 9 auf die Anströmseite (Unterseite) der Fußplatte mit der Durchführung nach FIG 9.

Figuren 11 bis 20 zeigen Draufsichten bzw. zugehörige, teilweise geschnittene Seitenansichten von Fußplatten weiterer Ausführungsformen des erfindungsgemäßen Kernreaktorbrennelementes.

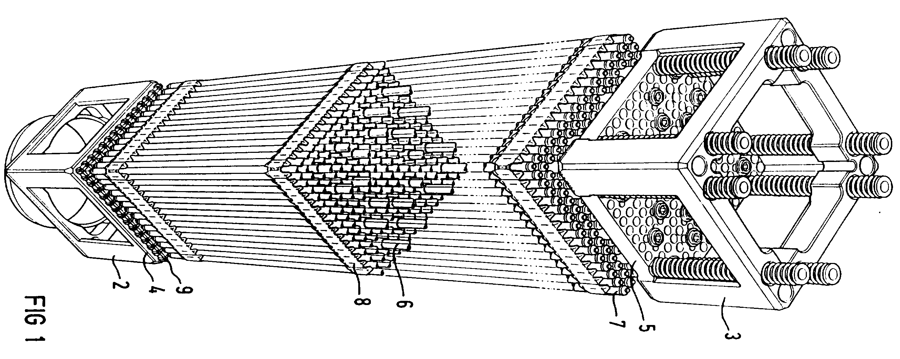

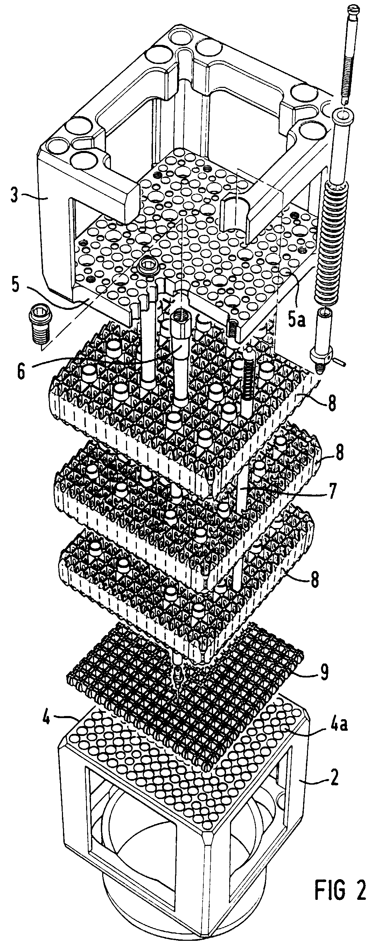

Das Kernreaktorbrennelement nach den Figuren 1 und 2 weist einen Brennelementfuß 2 und einen Brennelementkopf 3 auf. Der Brennelementfuß 2 ist quaderförmig ausgeführt und hat als Quaderseite eine Fußplatte 4.

Der Brennelementkopf 3 ist ebenfalls quaderförmig ausgeführt und hat als Quaderseite eine Kopfplatte 5.

Zwischen der Fußplatte 4 und der Kopfplatte 5 sind Steuerstabführungsrohre 6, Kernbrennstoff enthaltende Brennstäbe 7 und zu der Fußplatte 4 und der Kopfplatte 5 parallele gitterförmige Abstandhalter 8 angeordnet. Die gitterförmigen Abstandhalter 8 haben voneinander und von der Fußplatte 4 bzw. der Kopfplatte 5 Abstand. Die Führungsrohre 6 und die Brennstäbe 7 sind rechtwinklig zur Fußplatte 4 und zur Kopfplatte angeordnet. Jedes Steuerstabführungsrohr 6 und jeder Brennstab 7 sind jeweils durch eine Masche der gitterförmigen Abstandhalter 8 hindurchgeführt. Während die Führungsrohre 6 jeweils mit einem Ende in die Fußplatte 4 bzw. in die Kopfplatte 5 greifen und an der Fußplatte 4 bzw. der Kopfplatte 5 festgeschraubt sind, haben die Brennstäbe 7 an ihren Enden Abstand von der Fußplatte 4 bzw. der Kopfplatte 5. Dafür sind die Brennstabe 7 mit Hilfe von Federn und festen Gegennoppen, die sich in den Maschen der gitterförmigen Abstandhalter 8 befinden, kraftschlüssig gehalten und fest positioniert.

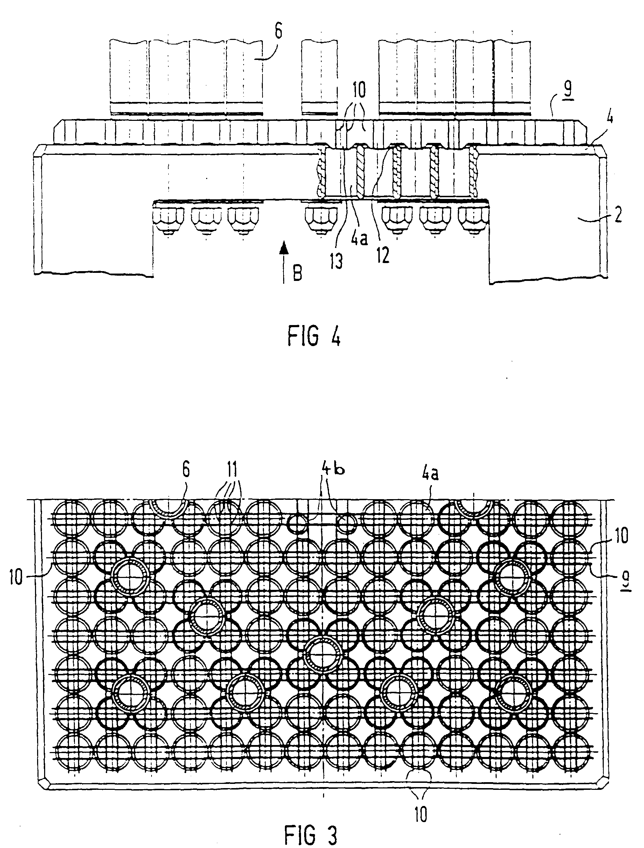

Die Stäbe (7) bzw. Rohre (6) sind in zueinander parallelen Zeilen und zueinander parallelen Spalten angeordnet. Zeilen und Spalten sind zueinander rechtwinklig. Wie insbesondere FIG 3 zeigt, ist der Abstand zwischen zwei Zeilen und der Abstand zwischen zwei Spalten jeweils gleich. Zeilenabstand und Spaltenabstand sind ebenfalls gleich. Die Brennstäbe 7 stehen rechtwinklig zur Fußplatte 4 und begrenzen Zwischenräume zwischen benachbarten Zeilen und benachbarten Spalten über der Abströmseite der Fußplatte 4.

Auf der Abströmseite der Fußplatte 4, über der die zueinander parallelen Brennstäbe 7 stehen, ist ein Abfanggitter 9 aus sich kreuzenden Stegen 10 angebracht. Diese Stege 10 sind hochkant angeordnete Blechstreifen, die - wie FIG 4 zeigt - an Schweißstellen 12 mit der Fußplatte 4 verschweißt sind.

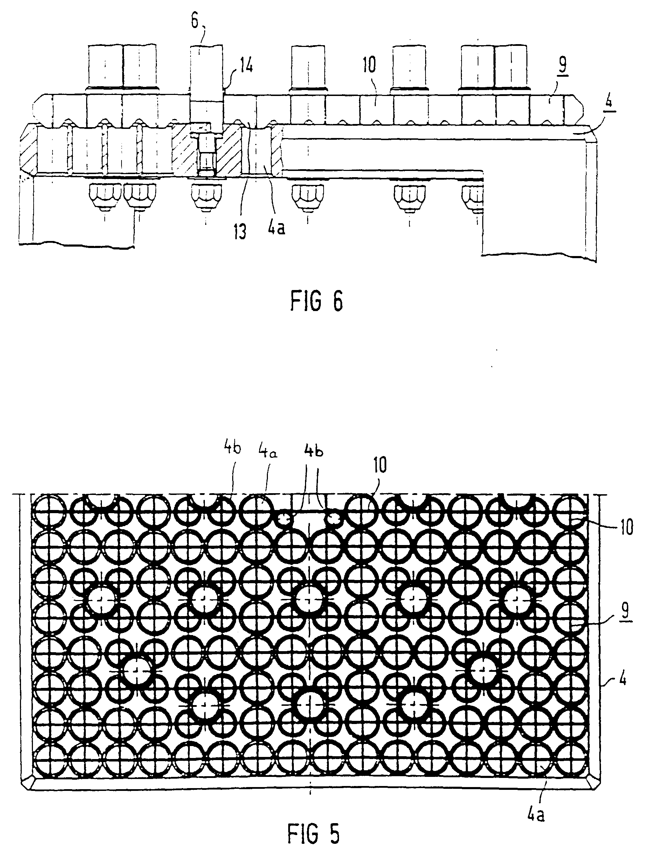

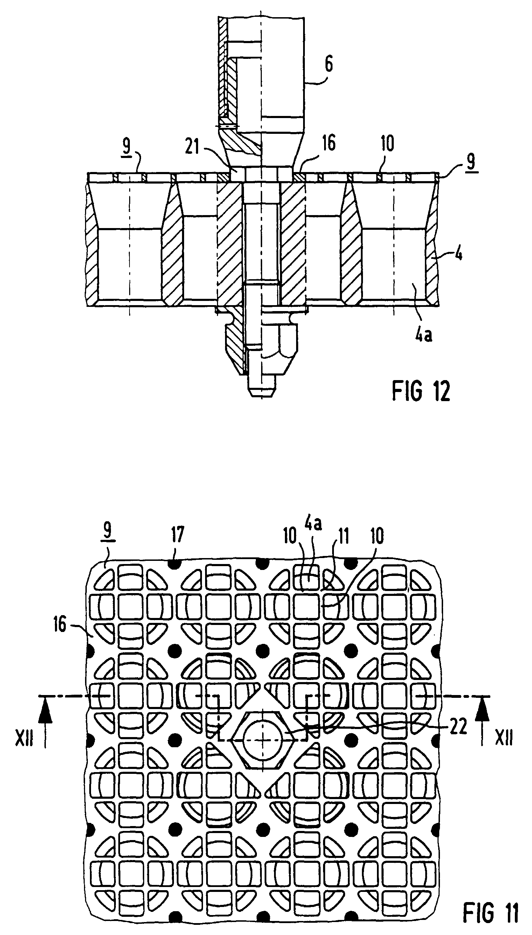

In die Zwischenräume zwischen den genannten Zeilen und Spalten, die von den Stäben 7 und Rohren 6 gebildet werden, münden Durchführungen 4a in die Fußplatte. Während Durchtrittsöffnungen, die Steuerstabführungsrohre 6 umgeben, bei den Ausführungsbeispielen die Figuren 3, 5, 11, 13, 15, 17 und 19 nicht vollkommen kreisrunde Öffnungen haben, haben die Mehrzahl der Durchführungen (Durchführungen 4a) kreisrunde Querschnitte und sind - gegebenenfalls mit wenigen Ausnahmen (vgl. die kleineren Durchtrittsöffnungen 4b in der Umgebung eines zentralen Stabes oder Rohres nach FIG 3 und FIG 5) mit ihren Mittelpunkten ebenfalls in äquidistanten, zueinander senkrechten Zeilen und Spalten angeordnet. In den Ausführungsbeispielen der Figuren 11, 13, 15, 17 und 19 sind die Radien aller Durchführungen gleich, in anderen Ausführungsbeispielen haben Durchtrittsöffnungen, die Steuerführungsrohre umgeben, kleinere Radien.

Während die Brennstäbe 7 oberhalb der Fußplatte enden, befinden sich die Kreuzungsstellen 11 der Stege 10 des Abfanggitters 9 auf der Abströmseite der Fußplatte 4 über den Durchführungen 4a in dieser Fußplatte 4. Im Falle der Figuren 3 und 4 ist beiderseits jeder Zeile und Spalte ein Steg 10 mit einem Abstand von der betreffenden Zeile bzw. Spalte angeordnet, der für alle Stege 10 gleich groß und so gewählt ist, daß über jeder Durchführung 4a jeweils 2 x 2 Stege 10 vier Kreuzungsstellen 11 bilden.

Kühlmittel wie Wasser, das in Richtung des Pfeiles B in FIG 4 im rechten Winkel auf die Unter- bzw. die Anströmseite der Fußplatte 4 zuströmt, durchströmt die Fußplatte 4 durch die Durchführungen 4a, 4b und die Maschen des Abfanggitters 9 hindurch und gelangt in den Zwischenraum zwischen den Brennstäben 7, die von diesem Kühlmittel gekühlt werden. Vom Kühlmittel mitgeführte Festkörper prallen auf die Anströmseite der Fußplatte 4 und werden so zurückgehalten. Festkörper, die in die Durchführungen 4a gelangten, werden durch die sich über den Durchführungen 4a auf der Abströmseite der Fußplatte 4 kreuzenden Stege 10 des Abfanggitters 9 abgefangen und können so nicht in den Zwischenraum zwischen den Brennstäben 7 gelangen. Auch wenn die Stege 10 verhältnismäßig dünne Blechstreifen sind, sind sie doch recht widerstandsfähig gegen Aufprall von Festkörpern, da das Abfanggitter 9 auf der Fußplatte 4 nur geringe Stützabstände durch die Schweißstellen 12 hat.

An den Kreuzungsstellen 11 der Stege 10 bildet jeder Steg 10 an den Anstzömseiten aes Abfanggitters 9 eine Zunge 13, mit der er in eine der Durchführungen 4a in der Fußplatte 4 greift. Dadurch wird nicht nur die Montage des Abfanggitters 9 auf der Abströmseite der Fußplatte 4 erleichtert, sondern auch der strömungswiderstand verringert, den das Abfanggitter 9 dem flüssigen Kühlmittel entgegengesetzt, das in einem Kernreaktor die Durchführungen 4a zur Abströmseite der Fußplatte 4 hin durchströmt.

Die Ausführungsform des erfindungsgemäßen Kernreaktorbrennelementes nach FIG 5 und 6, in denen gleiche Teile mit gleichen Bezugszeichen wie in den Figuren 3 und 4 versehen sind, unterscheidet sich vom Kernreaktorbrennelement nach den Figuren 3 und 4 nicht nur dadurch, daß das Abfanggitter 9 mit quadratischen Mascnen nur eine einzige Kreuzungsstelle von zwei Stegen 10 über jeder Durchführung 4a in der Fußplatte 4 bildet, sondern auch dadurch, daß die Steuerstabführungsrohre 6 außen einen koaxialen ringförmigen Bund 14 aufweisen, der das Abfanggitter 9 an dessen Abströmseite hintergreift und auf der Abströmseite cer Fußplatte 4 festhält. Auf diese Weise können metallurgische und damit nicht lösbare Befestigungsstellen für das Abfanggitter 9 an der Fußplatte 4 vermieden werden.

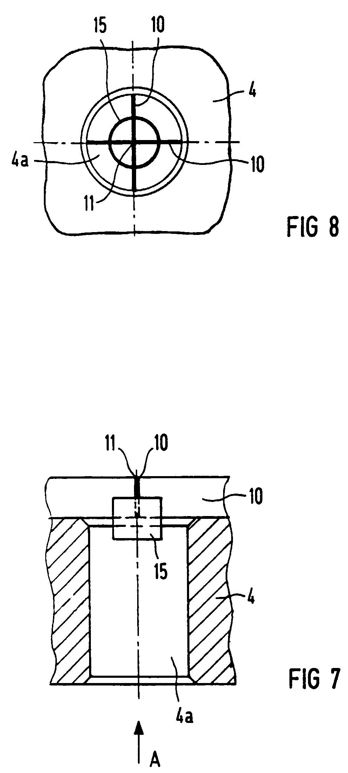

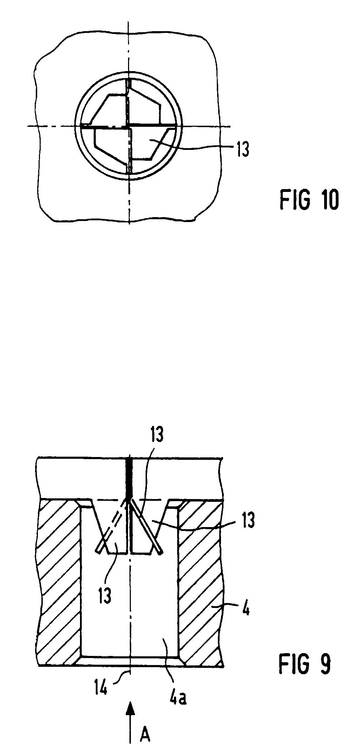

Die Figuren 7 und 8 verdeutlichen eine Ausführungsform des erfindungsgemäßen Kernreaktorbrennelementes, die sich von der Ausführungsform nach den Figuren 5 und 6 dadurch unterscheidet, daß anstelle der Zungen 13 jeweils ein Hohlzylinder 15 aus Metall mit zur Abströmseite der Fußplatte 4 rechtwinkliger Zylinderachse ausgebildet ist. Dieser Hohlzylinder 15 ist beispielsweise an der der Abströmseite der Fußplatte 4 aufliegenden Anströmseite des Abfanggitters 9 angeschweißt. Jede Kreuzungsstelle 11 der Stege 10 befindet sich im Zentrum des Querschnitts eines der Hohlzylinder 15, und jeder Hohlzylinder 15 greift in eine Durchführung 4a der Fußplatte 4. Auf diese Weise gelingt es, noch kleinere Festkörper als mit dem Abfanggitter nach FIG 9 im Kühlmittelstrom eines Kernreaktors abzufangen.

Die Ausführungsform des erfindungsgemäßen Kernreaktorbrennelementes, die in den Figuren 9 und 10 angedeutet ist, unterscheidet sich von der Ausführungsform nach den Figuren 5 und 6 dadurch, daß die Zungen 13 an der Anströmseite des Abfanggitters 9 an den Kreuzungsstellen 11 mit der Abströmseite der Fußplatte 4 einen Winkel bilden, der kleiner als 90° ist. Außerdem ist die eine Hälfte jeder Zunge 13 in eine andere Richtung von der Längsachse 14 der Durchführung 4a weggeneigt als die andere Hälfte. Das Abfanggitter 9 mit den Zungen 13 entsprechend den Figuren 9 und 10 kann nicht nur kleinere Festkörper in einem die Durchführungen 4a durchströmenden flüssigen Kühlmittel abfangen als das Abfanggitter 9 nach FIG 5 und 6, sondern die Größe der abfangbaren Festkörper kann zumindest in einem bestimmten Bereich durch Einstellen des Neigungswinkels der Zungen 13 zu der Abströmseite der Fußplatte 4 eingestellt werden. Günstigerweise können die Zungen 13 gewölbt sein.

Von den Kernreaktorbrennelementen nach den Figuren 3 bis 6 unterscheiden sich die Kernreaktorbrennelemente nach den Figuren 11 bis 20 mit gleichen Bezugszeichen für gleiche Teile insbesondere dadurch, daß das Abfanggitter 9 ein flach auf der Abströmseite der Fußplatte 4 aufliegendes Blech (16) ist, aus dem die Stege 10 mit den Kreuzungsstellen 11 über jeder Durchführung 4a der Fußplatte 4 z.B. durch Herausstanzen, Laserschneiden, elektrochemische Bearbeitung oder Funkenerosion herausgearbeitet sind. In den Figuren 11 und 12 ist das Blech 16 an den Schweißstellen 17 auf der Abströmseite der Fußplatte 4 durch Punktschweißen befestigt.

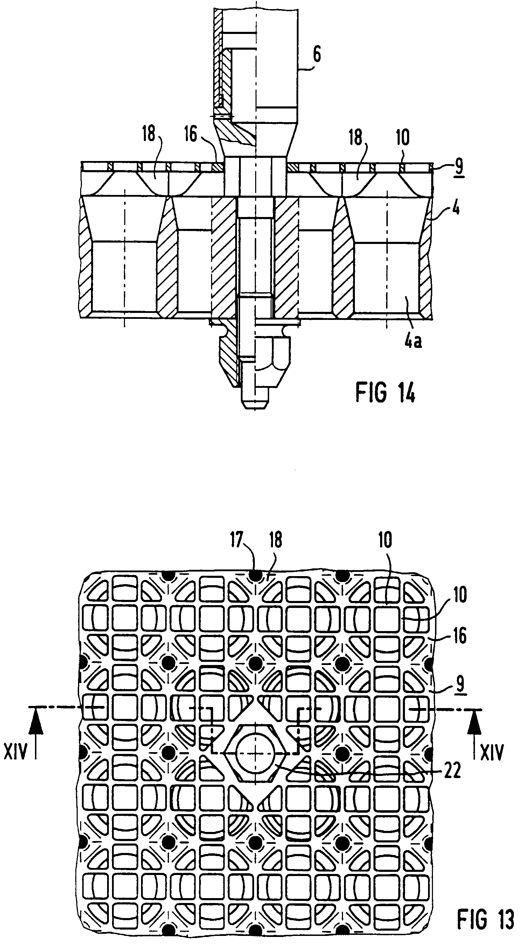

Bei der Ausführungsform des Kernreaktorbrennelementes nach den Figuren 13 und 14 weist das Blech 16 mit den Stegen 10 Tiefziehstellen 18 auf, die zur Abströmseite der Fußplatte 4 hin gerichtet sind. Diese Tiefziehstellen 18 liegen auf dieser Abströmseite auf. Das Blech 16 ist an diesen Tiefziehstellen 18 an Schweißstellen 17 durch Punktschweißen an der Abströmseite der Fußplatte 4 festgeschweißt. Dadurch wird eine Verringerung des Strömungswiderstandes erzielt, den das Abfanggitter 9 auf der Abströmseite der Fußplatte 4 einem die Durchführungen 4a durchströmenden flüssigen Kühlmittel entgegensetzt.

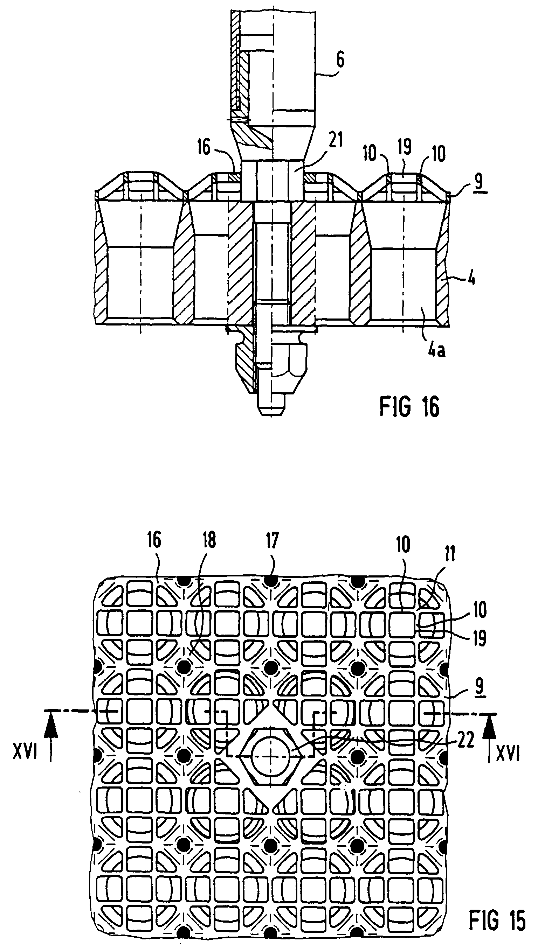

Von der Ausführungsform des Kernreaktorbrennelementes nach den Figuren 13 und 14 unterscheidet sich die Ausführungsform nach den Figuren 15 und 16 insbesondere dadurch, daß sich die Stege 10 des Bleches 16 über jeder Durchführung 4a der Fußplatte 4 an von der Abströmseite der Fußplatte 4 weggerichteten Tiefziehstellen 19 ausgebildet sind. Dadurch wird der Strömungswiderstand für durch die Durchführungen 4a strömendes flüssiges Kühlmittel weiter verringert.

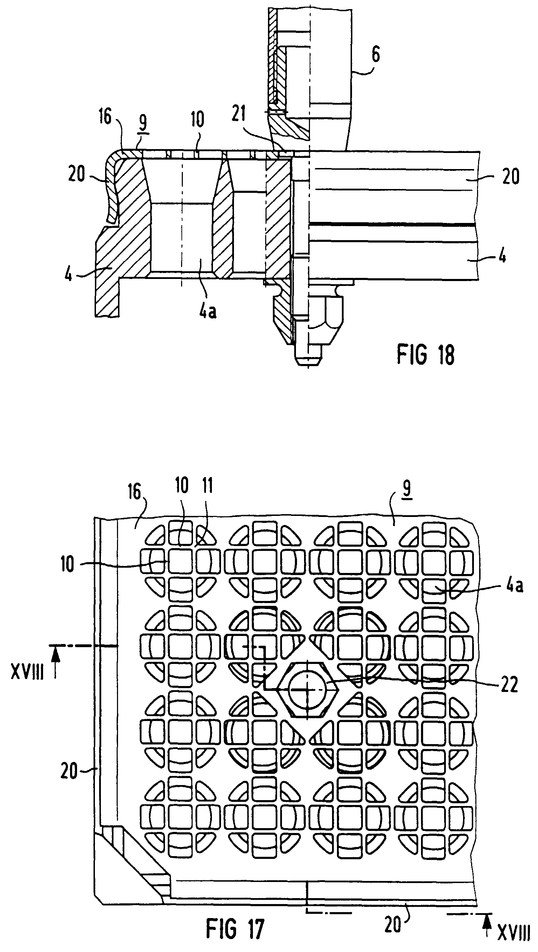

Die Ausführungsform des erfindungsgemäßen Kernreaktorbrennelementes nach den Figuren 17 und 18 unterscheidet sich von der Ausführungsform nach den Figuren 11 und 12 insbesondere dadurch, daß das Blech 16 mit den sich in den Kreuzungsstellen 11 kreuzenden Stegen 10 den Rand der Fußplatte 4 mit einem Rastrahmen 20 übergreift. Mit diesem Rastrahmen 20 ist das Blech 16 an der Fußplatte 4 lösbar verrastet.

Bei den Ausführungsformen des Kernreaktorbrennelementes entsprechend den Figuren 11 bis 18 durchgreift ein Steuerstabführungsrohr 6 das Blech 16 mit einem Rohrquerschnitt, der die Außenkontur eines regelmäßigen Sechseckes hat und formschlüssig in eine Durchführung 22 im Blech 16 greift, deren Kontur ebenfalls ein angepaßtes regelmäßiges Sechseck ist. Das Blech 16 ist so verdrehungssicher auf der Abströmseite der Fußplatte 4 angebracht. Im Falle der Figuren 17 und 18 hintergreift das Steuerstabführungsrohr 6 zu Halterungszwecken das Blech 16 auf dessen Abströmseite.

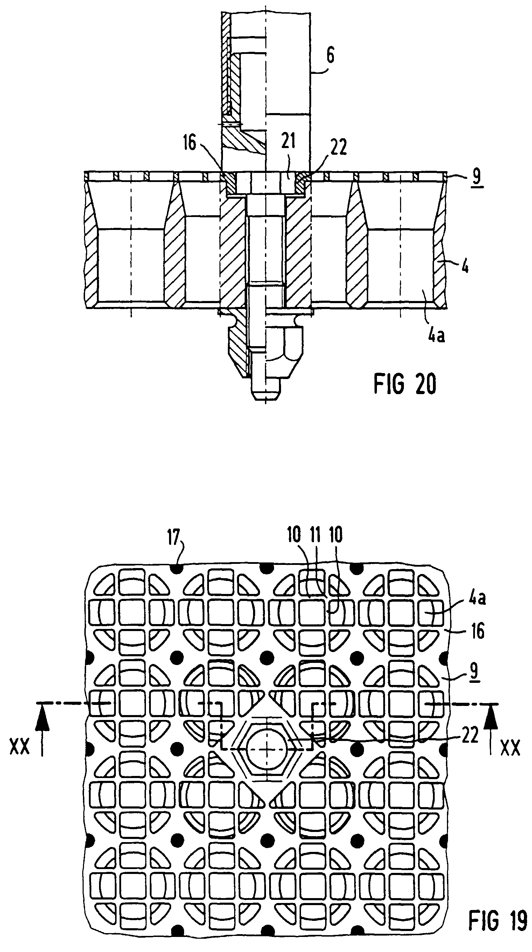

Das Kernreaktorbrennelement nach den Figuren 19 und 20 unterscheidet sich von der Ausführungsform nach den Figuren 17 und 18 insbesondere dadurch, daß das Blech 16 an der Durchführung 22, deren Kontur der Außenkontur in Form eines regelmäßigen Sechseckes des Steuerstabführungsrohres 6 angepaßt ist, in ein Gesenk in der Fußplatte 4 in den Zwischenraum zwischen dem Führungsrohr 6 und der Fußplatte 4 hinein tiefgezogen ist. Dies erleichtert das Lösen der Schraubverbindung zwischen der Fußplatte 4 und dem Steuerstabführungsrohr 6.

Die Durchführungen 4a in der Fußplatte 4 der Ausführungsformen des Kernreaktorbrennelementes entsprechend den Figuren 11 bis 20 erweitern sich günstigerweise zur Abströmseite dieser Fußplatte 4 hin spitzwinklig. Dies verringert ebenfalls den Strömungswiderstand, den das Abfanggitter die Fußplatte 4 durchströmendem flüssigen Kühlmittel entgegensetzt.

## Patentansprüche

1. Kernreaktorbrennelement mit
a) einem Kopfteil und einem Fußteil mit einer Kopfplatte (5)und einer Fußplatte (4), die jeweils Durchführungen (4a) für Kühlmittel aufweisen,
b) mehreren zueinander parallelen Stäben oder Rohren (6, 7), von denen mindestens ein Teil als Brennstäbe (7) ausgebildet ist, die Kernbrennstoff enthalten und in zueinander parallelen Reihen und dazu senkrechten Spalten mit Zwischenräumen angeordnet sind, in die die Durchführungen (4a) münden, und
c) einem auf der der Kopfplatte (5) zugewandten Abströmseite der Fußplatte angeordneten Abfanggitter (9) mit Gitterstegen (10), die die Durchführungen überdeckende Kreuzungsstellen bilden,
**dadurch gekennzeichnet**, daß das Abfanggitter (9) direkt an der Fußplatte befestigt ist.

2. Kernreaktorbrennelement nach Anspruch 1,
**dadurch gekennzeichnet**, daß das Abfanggitter mit der Fußplatte verschweißt (Figur 4) und/oder verschraubt (Figur 6, Figur 20) ist.

3. Kernreaktorbrennelement nach Anspruch 1,
**dadurch gekennzeichnet**, daß das Abfanggitter (16) mittels eines den Rand der Fußplatte übergreifenden Rahmenteils (20) an der Fußplatte lösbar befestigt ist. (Figur 18)

4. Kernreaktorbrennelement nach einem der Ansprüche 1 bis 3,
**dadurch gekennzeichnet**, daß sich die Stege (10) parallel zu den Zeilen und Spalten über die Durchführung erstrecken.

5. Kernreaktorbrennelement nach einem der Ansprüche 1 bis 4,
**dadurch gekennzeichnet**, daß das Abfanggitter (9) an der Kreuzungsstelle (11) der Stege (10) eine Zunge (13) bildet, die in eine der Durchführungen (4a) greift.

6. Kernreaktorbrennelement nach Anspruch 5,
**dadurch gekennzeichnet**, daß die Zunge (13) schräg zur Brennelementachse in die Durchführung ragt.

7. Kernreaktorbrennelement nach einem der Ansprüche 1 bis 4,
**dadurch gekennzeichnet**, daß das Abfanggitter (9) an der Kreuzungsstelle (11) einen Hohlzylinder (15) mit zur Abstromseite der Fußplatte (4) rechtwinkliger Zylinderachse bildet, der in die Durchführung (4a) greift.

8. Kernreaktorbrennelement nach einem der Ansprüche 1 bis 7,
**dadurch gekennzeichnet**, daß die Stege (10) des Abfanggitters (9) hochkant angeordnete Blechstreifen sind.

9. Kernreaktorbrennelement nach einem der Ansprüche 1 bis 4,
**dadurch gekennzeichnet**, daß das Abfanggitter (9) ein Blech (16) ist, aus dem die Stege (10) mit der Kreuzungsstelle (11) über jeder Durchführung (4a) der Fußplatte (4) herausgearbeitet sind.

10. Kernreaktorbrennelement nach Anspruch 9,
**dadurch gekennzeichnet**, daß das Blech (16) Tiefziehstellen (18) zur Abströmseite der Fußplatte (4) hin aufweist, die auf dieser Abströmseite aufliegen.

11. Kernreaktorbrennelement nach Anspruch 9,
**dadurch gekennzeichnet**, daß das Abfanggitter (16) formschlüssig und verdrehungssicher auf einem in die Fußplatte (4) eingreifenden Ende eines Stabes oder eines Steuerstabführungsrohrs sitzt.

12. Kernreaktorbrennelement nach einem der Ansprüche 1 bis 11,
**dadurch gekennzeichnet**, daß sich die Durchführungen (4a) in der Fußplatte (4) zur Abströmseite dieser Fußplatte hin spitzwinklig erweitern.

## Claims

1. Nuclear reactor fuel element having
a) a head portion and a base portion with a head plate (5) and a base plate (4), each of which have ducts (4a) for coolant,
b) a plurality of rods or tubes (6, 7) which are parallel to each other and at least one portion of which is formed as fuel rods (7) which contain nuclear fuel and are arranged in rows parallel to each other and in columns perpendicular thereto with interspaces into which the ducts (4a) discharge, and
c) a catch grid (9) which is arranged on the exit side of the base plate that faces the head plate (5) and which has grid webs (10) which form the points of intersection which cover the ducts,
characterised in that the catch grid (9) is secured directly to the base plate.

2. Nuclear reactor fuel element according to claim 1, characterised in that the catch grid is welded together with the base plate (Figure 4) and/or screwed together therewith (Figure 6, Figure 20).

3. Nuclear reactor fuel element according to claim 1, characterised in that the catch grid (16) is detachably secured to the base plate by means of a frame portion (20) which engages over the edge of the base plate. (Figure 18)

4. Nuclear reactor fuel element according to one of the claims 1 to 3, characterised in that the webs (10) extend over the duct so as to be parallel to the lines and columns.

5. Nuclear reactor fuel element according to one of the claims 1 to 4, characterised in that the catch grid (9), at the point of intersection (11) of the webs (10), forms a tongue (13) which engages into one of the ducts (4a).

6. Nuclear reactor fuel element according to claim 5, characterised in that the tongue (13) projects into the duct obliquely relative to the fuel element axis.

7. Nuclear reactor fuel element according to one of the claims 1 to 4, characterised in that the catch grid (9), at the point of intersection (11), forms a hollow cylinder (15) which has a cylinder axis that is square to the exit side of the base plate (4) and which engages into the duct (4a).

8. Nuclear reactor fuel element according to one of the claims 1 to 7, characterised in that the webs (10) of the catch grid (9) are sheet-metal strips which are arranged in an upright position on end.

9. Nuclear reactor fuel element according to one of the claims 1 to 4, characterised in that the catch grid (9) is a metal sheet (16), out of which the webs (10) are worked with the point of intersection (11) over each duct (4a) of the base plate (4).

10. Nuclear reactor fuel element according to claim 9, characterised in that the metal sheet (16) has points (18) which are deep-drawn towards the exit side of the base plate (4) and lie on this exit side.

11. Nuclear reactor fuel element according to claim 9, characterised in that the catch grid (16) is located in a form-closing and torsion-resisting manner on one end of a rod or a control rod-guiding tube that engages into the base plate (4).

12. Nuclear reactor fuel element according to one of the claims 1 to 11, characterised in that the ducts (4a) in the base plate (4) are widened in an acute-angled manner towards the exit side of this base plate.

## Revendications

1. Assemblage combustible de réacteur nucléaire comprenant
a) une partie de tête et une partie de pied ayant une plaque (5) de tête et une plaque (4) de pied, qui comportent respectivement deux passages (4a) pour du fluide de refroidissement,
b) plusieurs crayons ou tubes (6, 7) parallèles entre eux, dont au moins une partie est constituée en crayons (7) combustibles qui renferment de la matière combustible nucléaire et sont disposés en rangées parallèles entre elles et en colonnes qui leur sont perpendiculaires avec des intervalles, dans lesquels débouchent les passages (4a), et
c) une grille (9) de capture, disposée sur la face de sortie de la plaque de pied qui est tourné vers la plaque (5) de tête et ayant des parties pleines qui forment les points d'intersection recouvrant les passages,
caractérisé en ce que la grille (9) de capture est fixée directement à la plaque de pied.

2. Assemblage combustible de réacteur nucléaire suivant la revendication 1, caractérisé en ce que la grille de capture est soudée (figure 4) à la plaque de pied et/ou vissée (figure 6, figure 20) à la plaque de pied.

3. Assemblage combustible de réacteur nucléaire suivant la revendication 1, caractérisé en ce que la grille (16) de capture est fixée de manière amovible à la plaque de pied au moyen d'une partie (20) en forme de cadre s'accrochant au bord de la plaque de pied (figure 18).

4. Assemblage combustible de réacteur nucléaire suivant l'une des revendications 1 à 3, caractérisé en ce que les parties pleines (10) s'étendent parallèlement aux lignes et aux colonnes au-dessus du passage.

5. Assemblage combustible de réacteur nucléaire suivant l'une des revendications 1 à 4, caractérisé en ce que la grille (9) de capture forme aux points d'intersection des parties pleines (10) une languette (13) qui pénètre dans l'un des passages (4a).

6. Assemblage combustible de réacteur nucléaire suivant la revendication 5, caractérisé en ce que la languette (13) fait saillie dans le passage en étant inclinée par rapport à l'axe de l'assemblage combustible.

7. Assemblage combustible de réacteur nucléaire suivant l'une des revendications 1 à 4, caractérisé en ce que la grille (9) de capture forme aux points (11) d'intersection, un cylindre (15) creux d'axe à angle droit avec la face de sortie de la plaque (4) de pied et qui pénètre dans le passage (4a).

8. Assemblage combustible de réacteur nucléaire suivant l'une des revendications 1 à 7, caractérisé en ce que les parties pleines (10) de la grille (9) de capture sont des bandes de tôle sur champ.

9. Assemblage combustible de réacteur nucléaire suivant l'une des revendications 1 à 4, caractérisé en ce que la grille (9) de capture est une tôle (16) dans laquelle sont usinées les parties pleines (10) avec les points (11) d'intersection au-dessus de chaque passage (4a) de la plaque (4) de pied.

10. Assemblage combustible de réacteur nucléaire suivant la revendication 9, caractérisé en ce que la tôle (16) comporte des points (18) d'emboutissage profonds allant vers la face de sortie de la plaque (4) de pied et s'appliquant sur cette face de sortie.

11. Assemblage combustible de réacteur nucléaire suivant la revendication 9, caractérisé en ce que la grille (16) de capture s'applique, avec complémentarité de forme et sans pouvoir tourner, à une extrémité d'un crayon ou d'un tube guide de crayon de commande, qui pénètre dans la plaque (4) de pied.

12. Assemblage combustible de réacteur nucléaire suivant l'une des revendications 1 à 11, caractérisé en ce que les passages (4a) ménagés dans la plaque (4) de pied s'élargissent en pointe en direction de la face de sortie de cette plaque de pied.
